(19) Europäisches Patentamt
European Patent Office
Office européen des brevets

(11) **EP 4 215 364 A1**

(12) # EUROPEAN PATENT APPLICATION
published in accordance with Art. 153(4) EPC

(43) Date of publication:
**26.07.2023 Bulletin 2023/30**

(21) Application number: **21869362.0**

(22) Date of filing: **14.09.2021**

(51) International Patent Classification (IPC):
***B32B 27/30*** *(2006.01)* ***A01N 27/00*** *(2006.01)*
***A01N 31/00*** *(2006.01)* ***A01N 37/00*** *(2006.01)*
***A01P 1/00*** *(2006.01)* ***C08L 25/04*** *(2006.01)*
***C08L 25/08*** *(2006.01)* ***C08L 33/00*** *(2006.01)*
***C08L 33/02*** *(2006.01)* ***C08L 101/00*** *(2006.01)*
***A01N 41/04*** *(2006.01)* ***A01N 25/10*** *(2006.01)*

(52) Cooperative Patent Classification (CPC):
**A01N 25/10; A01N 27/00; A01N 31/00; A01N 37/00; A01N 41/04; A01P 1/00; B32B 27/30; C08L 25/04; C08L 25/08; C08L 33/00; C08L 33/02; C08L 101/00**

(86) International application number:
**PCT/JP2021/033773**

(87) International publication number:
**WO 2022/059676 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 JP 2020157483**
**23.03.2021 JP 2021049057**

(71) Applicant: **DAI NIPPON PRINTING CO., LTD.**
**Tokyo 162-8001 (JP)**

(72) Inventors:
- **NAKAJIMA, Tomomi**
  **Tokyo 162-8001 (JP)**
- **SUMIDA, Yosuke**
  **Tokyo 162-8001 (JP)**
- **NETSU, Yoshiaki**
  **Tokyo 162-8001 (JP)**
- **WADA, Masataka**
  **Tokyo 162-8001 (JP)**
- **YOSHINAMI, Risa**
  **Tokyo 162-8001 (JP)**
- **MORIYAMA, Koji**
  **Tokyo 162-8001 (JP)**
- **NAKAMURA, Katsuji**
  **Tokyo 162-8001 (JP)**

(74) Representative: **Müller-Boré & Partner Patentanwälte PartG mbB**
**Friedenheimer Brücke 21**
**80639 München (DE)**

(54) **ANTIVIRAL ARTICLE AND ANTIVIRAL RESIN COMPOSITION**

(57) The invention provides an antiviral article that is capable of reducing color problems such as discoloration caused by light. Specifically, the invention provides an antiviral article comprising a cured product layer, wherein the cured product layer comprises a cured product of a curable resin composition, and antiviral particles, and the antiviral particles contain at least one kind of antiviral particles A selected from the group consisting of 1) particles containing a styrene polymer derivative compound and an unsaturated carboxylic acid derivative compound, 2) mixed particles of particles containing a styrene polymer derivative compound and particles containing an unsaturated carboxylic acid derivative compound, and 3) particles containing a styrene resin.

Fig. 3

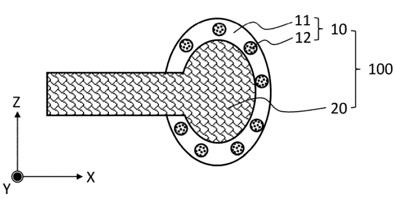


EP 4 215 364 A1

## Description

### Technical Field

The present invention relates to an antiviral article and an antiviral resin composition.

### Background Art

From the viewpoint of hygiene, antibacterial treatment has been conventionally applied to the surfaces of objects that are touched by human hands, such as building interior materials, vehicle interior materials, office automation equipment, and touch screens, by applying a composition having antibacterial properties.

For example, Patent Literature (PTL) 1 to PTL 3 propose techniques for compositions having antibacterial properties or techniques for antibacterial articles. However, only having antibacterial properties is not sufficient for viruses as typified by the influenza virus. That is, the compositions or articles having antibacterial properties disclosed in PTL 1 to PTL 3 sometimes does not show satisfactory antiviral properties.

On the other hand, PTL 4 and PTL 5 propose techniques for compositions or articles having antiviral properties.

### Citation List

### Patent Literature

PTL 1: JPS63-265958A
PTL 2: JP3551201B
PTL 3: JP4840048B
PTL 4: JP6145758B
PTL 5: JP6229429B

### Summary of Invention

### Technical Problem

The antiviral resin composition of PTL 4 contains cuprous oxide particles and the like. Thus, coloring from cuprous oxide (reddish brown) cannot be avoided.

In the interior decorative sheet having antiviral properties of PTL 5, a silver-based inorganic additive or a zinc-based inorganic additive is blended in the coating resin for the outermost surface of the decorative sheet.

Of the additives used in PTL 5, the former silver-based inorganic additive has a problem of discoloration to brown by light (visible light or ultraviolet rays). In particular, an increase in the amount of the silver-based inorganic additive so as to exhibit antiviral properties causes a significant problem of discoloration by light.

An object of the present invention is to provide an antiviral article and antiviral resin composition that are capable of reducing color problems such as discoloration caused by light.

### Solution to Problem

To solve the above problem, the present invention provides the following embodiments [1] to [13].

[1] An antiviral article comprising a cured product layer,
wherein
the cured product layer comprises a cured product of a curable resin composition, and antiviral particles, and the antiviral particles contain at least one kind of antiviral particles A selected from the group consisting of

1) particles containing a styrene polymer derivative compound and an unsaturated carboxylic acid derivative compound,
2) mixed particles of particles containing a styrene polymer derivative compound and particles containing an unsaturated carboxylic acid derivative compound, and
3) particles containing a styrene resin.

[2] The antiviral article according to Item 1, wherein the antiviral particles A are present in an amount of 0.5 to 20.0 parts by mass per 100 parts by mass of the cured product.

[3] The antiviral article according to Item 1 or 2, wherein the cured product layer is present on a base material.

[4] The antiviral article according to any one of Items 1 to 3, wherein components constituting the antiviral particles A of 1) and/or 2) have at least one structure selected from the group consisting of styrene, sodium sulfonate, acrylic acid, maleic acid, and fumaric acid.

[5] The antiviral article according to any one of Items 1 to 4, wherein the cured product layer further comprises a phenyl ether derivative compound.

[6] The antiviral article according to any one of Items 1 to 5, wherein the cured product layer further comprises at least one member selected from the group consisting of antibacterial agents and anti-allergen agents.

[7] The antiviral article according to any one of Items 1 to 6, wherein the antiviral particles further contain antiviral particles B, which are different from the antiviral particles A.

[8] The antiviral article according to any one of Items 1 to 7, wherein the antiviral particles have two different particle size peaks.

[9] An antiviral resin composition comprising
a curable resin composition and antiviral particles, wherein the antiviral particles contain at least one kind of antiviral particles A selected from the group consisting of

1) particles containing a styrene polymer derivative compound and an unsaturated carboxylic acid derivative compound,
2) mixed particles of particles containing a styrene polymer derivative compound and particles containing an unsaturated carboxylic acid derivative compound, and
3) particles containing a styrene resin.

[10] The antiviral resin composition according to Item 9, further comprising a phenyl ether derivative compound.

[11] The antiviral resin composition according to Item 9 or 10, further comprising at least one member selected from the group consisting of antibacterial agents and anti-allergen agents.

[12] The antiviral resin composition according to any one of Items 9 to 11, wherein the antiviral particles further contain antiviral particles B, which are different from the antiviral particles A.

[13] The antiviral resin composition according to any one of Items 9 to 12, wherein the antiviral particles have two different particle size peaks.

Advantageous Effects of Invention

The present invention can provide an antiviral article and an antiviral resin composition that are capable of reducing color problems such as discoloration caused by light.

Brief Description of Drawings

Fig. 1 is cross-sectional views showing embodiments of the antiviral article of the present invention.
Fig. 2 is cross-sectional views showing other embodiments of the antiviral article of the present invention.
Fig. 3 is a cross-sectional view showing another embodiment of the antiviral article of the present invention.

## Description of Embodiments

### Antiviral Article

The antiviral article of the present invention is an article comprising a cured product layer, wherein the cured product layer comprises a cured product of a curable resin composition, and antiviral particles, and the antiviral particles contain at least one kind of antiviral particles A selected from the group consisting of 1) particles containing a styrene polymer derivative compound and an unsaturated carboxylic acid derivative compound, 2) mixed particles of particles containing a styrene polymer derivative compound and particles containing an unsaturated carboxylic acid derivative compound, and 3) particles containing a styrene resin.

Specifically, the antiviral particles according to the present invention contain the antiviral particles A. The antiviral particles A may be 1) particles containing a styrene polymer derivative compound and an unsaturated carboxylic acid derivative compound in combination, 2) mixed particles separately comprising particles containing a styrene polymer derivative compound and particles containing an unsaturated carboxylic acid derivative compound, 3) particles containing a styrene resin, the particles of 3) being different from the particles of 1) and 2), or any combination of the particles of 1) to 3). In the present invention, in addition to the antiviral particles A, antiviral particles B, which are different from the antiviral particles A, may be used in combination as long as they do not impair the effects of the present invention, as described in detail below. The term "antiviral particles" used below encompasses the antiviral particles A and the antiviral particles B.

Figs. 1(A) to (E), Figs. 2(A) to (D), and Fig. 3 are cross-sectional views showing representative embodiments of an antiviral article 100 of the present invention.

The antiviral articles 100 shown in Figs. 1(A) to (E), Figs. 2(A) to (D), and Fig. 3 comprise a cured product layer 10 comprising a cured product 11 of a curable resin composition and antiviral particles 12.

The antiviral articles 100 shown in Figs. 1 (A) to (E) are formed of a single layer of the cured product layer 10.

In Fig. 1(A), the cured product layer 10 comprises the antiviral particles 12 entirely in the cured product layer 10 in both the thickness direction (in the Z-axis direction in the drawing) and the in-plane direction (in each direction in the XY plane in the drawing). In Fig. 1(B), the cured product layer 10 comprises the antiviral particles 12 on the front surface side of the cured product layer 10 (the upper side of the drawing). In Fig. 1(C), the cured product layer 10 comprises the antiviral particles 12 on the front surface side (the upper side of the drawing) and the back surface side (the lower side of the drawing) of the cured product layer 10. In Fig. 1(D), the cured product layer 10 comprises the antiviral particles 12 in a part of a region in the in-plane direction on the front surface side of the cured product layer 10 (the upper side of the drawing). In Fig. 1(E), the cured product layer 10 comprises the antiviral particles 12 in a part of a region on the front surface side of the cured product layer 10 (the upper side of the drawing) and in a part of a region on the back surface side of the cured product layer 10 (the lower side of the drawing).

As shown in Figs. 1(A) to (E), the antiviral particles 12 may be present in any position in the cured product layer 10. However, from the viewpoint of enhancing antiviral properties, it is preferable that the antiviral particles 12 be present on the surface side that is to be touched by humans.

The antiviral article 100 of a single layer of the cured product layer 10 shown in Figs. 1(A) to (E) can be obtained, for example, by producing a laminate in which the cured product layer 10 is formed on a base material having release properties, and then peeling off the base material having release properties from the laminate.

In Figs. 2(A) to (D), the antiviral article 100 comprises the cured product layer 10 on a base material 20.

In Fig. 2(A), the antiviral article 100 comprises the cured product layer 10 on the entire surface on one side of the base material 20. In Fig. 2(B), the antiviral article 100 comprises the cured product layers 10 on the entire surfaces on both sides of the base material 20. In Fig. 2(C), the antiviral article 100 comprises the cured product layer 10 on a part of a region on one side (on the positive (+) side in the Z-axis direction in the drawing; the arrow-pointing direction in the drawing is the positive (+) side) of the base material 20. In Fig. 2(D), the antiviral article 100 comprises the cured product layers 10 on a part of a region on one side (on the positive (+) side in the Z-axis direction in the drawing) of the base material 20 and on a part of a region on the other side (on the negative (-) side in the Z-axis direction in the same drawing) of the base material 20.

As shown in Figs. 2(A) to (D), the cured product layer 10 may be formed on the entire surface of the base material 20 or on a portion of the base material 20. Further, as shown in Figs. 2(A) to (D), the cured product layer 10 may be formed on only one surface of the base material 20 or on both surfaces of the base material 20.

In Fig. 3, the antiviral article 100 comprises the cured product layer 10 on a three-dimensional base material 20. The three-dimensional base material 20 shown in Fig. 3 is a door handle. Fig. 3 is a cross-sectional view thereof.

### Cured Product of Curable Resin Composition

The cured product layer comprises a cured product of a curable resin composition. In the present specification,

the phrase "cured product of a curable resin composition" may be abbreviated as "the cured product." The curable resin composition substantially means a curable resin and comprises additives for curing the curable resin (e.g., a curing agent, a curing catalyst, a photopolymerization initiator, and a photopolymerization accelerator).

The cured product of the curable resin composition mainly plays a role of a binder resin. The presence of the cured product can improve the scratch resistance of the antiviral article and can help maintain the antiviral properties for a long period of time.

The cured product of the curable resin composition may be, for example, cured products of thermosetting resin compositions and/or cured products of ionizing radiation-curable resin compositions. Of these, cured products of ionizing radiation-curable resin compositions are preferred from the viewpoint of scratch resistance and production efficiency.

The thermosetting resin composition is a composition comprising at least a thermosetting resin and is a resin composition that is cured by heating.

Examples of thermosetting resins include acrylic resins, urethane resins, phenol resins, urea-melamine resins, epoxy resins, unsaturated polyester resins, silicone resins, and the like. In addition to these thermosetting resins, the thermosetting resin composition optionally comprises a curing agent, a curing catalyst, and the like.

Representative examples of ionizing radiation-curable resin compositions include electron beam-curable resin compositions and ultraviolet ray-curable resin compositions. Of these, electron beam-curable resin compositions are preferred because they do not require a polymerization initiator and thus cause less odor and less coloring. When the cured product layer comprises an ultraviolet absorber described below, the use of an electron beam-curable resin composition is preferred also because the crosslink density of the cured product layer is easily increased, and the scratch resistance and contamination resistance are easily improved.

The ionizing radiation-curable resin composition is a composition comprising a compound containing an ionizing radiation-curable functional group (referred to below as "the ionizing radiation-curable compound").

The ionizing radiation-curable functional group is a group that is crosslinked and cured upon irradiation with ionizing radiation. Preferable examples include functional groups containing an ethylenic double bond, such as (meth)acryloyl, vinyl, and allyl groups. Examples of ionizing radiation-curable functional groups also include epoxy and oxetanyl groups.

In the present specification, a (meth)acryloyl group means an acryloyl group or a methacryloyl group. Further, in the present specification, (meth)acrylate means acrylate or methacrylate.

Ionizing radiation refers to electromagnetic waves or charged particle beams that have an energy quantum capable of polymerizing or crosslinking molecules. Ultraviolet rays (UV) and/or electron beams (EB) are usually used. In addition to these, electromagnetic waves, such as X-rays and $\gamma$-rays, and charged particle beams, such as $\alpha$-rays and ion beams, may also be used.

Specifically, the ionizing radiation-curable compound for use can be suitably selected from polymerizable monomers and polymerizable oligomers (sometimes referred to as "polymerizable prepolymers") that have been commonly used as ionizing radiation-curable resins.

The ionizing radiation-curable compound is more preferably a compound having two or more ethylenically unsaturated bond groups, and particularly preferably a polyfunctional (meth)acrylate-based compound having two or more ethylenically unsaturated bond groups. The polyfunctional (meth)acrylate-based compound for use may be a monomer or an oligomer.

Among polyfunctional (meth)acrylate-based compounds, examples of difunctional (meth)acrylate-based monomers include ethylene glycol di(meth)acrylate, bisphenol A tetraethoxy diacrylate, bisphenol A tetrapropoxy diacrylate, 1,6-hexanediol diacrylate, and the like.

Examples of trifunctional or higher functional (meth)acrylate-based monomers include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, isocyanurate-modified tri(meth)acrylate, and the like.

Examples of polyfunctional (meth)acrylate-based oligomers include acrylate-based polymers, such as urethane (meth)acrylate, epoxy (meth)acrylate, polyester (meth)acrylate, and polyether (meth)acrylate, and the like.

A urethane (meth)acrylate is obtained, for example, by a reaction of a polyhydric alcohol and an organic diisocyanate with hydroxy(meth)acrylate.

Preferred examples of epoxy(meth)acrylates include (meth)acrylates obtained by reacting a trifunctional or higher functional aromatic epoxy resin, alicyclic epoxy resin, aliphatic epoxy resin, etc. with (meth)acrylic acid; (meth)acrylates obtained by reacting an difunctional or higher functional aromatic epoxy resin, alicyclic epoxy resin, aliphatic epoxy resin, etc. and a polybasic acid with (meth)acrylic acid; (meth)acrylates obtained by reacting a difunctional or higher functional aromatic epoxy resin, alicyclic epoxy resin, aliphatic epoxy resin etc. and phenols with (meth)acrylic acid.

The ionizing radiation-curable resin may be used singly or in a combination of two or more.

When the ionizing radiation-curable compound is an ultraviolet ray-curable compound, the ionizing radiation-curable resin composition preferably comprises additives, such as a photopolymerization initiator and a photopolymerization accelerator.

Examples of photopolymerization initiators include at least one member selected from acetophenone, benzophenone, α-hydroxyalkylphenone, Michler's ketone, benzoin, benzyl dimethyl ketal, benzoyl benzoate, α-acyl oxime ester, thioxanthones, and the like.

Photopolymerization accelerators can reduce polymerization inhibition by air during curing and accelerate the curing rate. Examples of photopolymerization accelerators include at least one member selected from p-dimethylaminobenzoic acid isoamyl ester, p-dimethylaminobenzoic acid ethyl ester, and the like.

The content of the cured product of the curable resin composition is preferably 50 mass% or more, more preferably 70 mass% or more, still more preferably 90 mass% or more, and most preferably 100 mass%, based on the total amount of the binder resin. In the present specification, "binder resin" is a generic term for resin components, including the curable resin contained in the curable resin composition, as well as non-curable resins that can function as a binder in the cured product layer.

Antiviral Particles

The cured product layer comprises a cured product of a curable resin composition and antiviral particles. The antiviral particles are characterized by containing at least one kind of antiviral particles A selected from the group consisting of 1) particles containing a styrene polymer derivative compound and an unsaturated carboxylic acid derivative compound, 2) mixed particles of particles containing a styrene polymer derivative compound and particles containing an unsaturated carboxylic acid derivative compound, and 3) particles containing a styrene resin. The phrase "3) particles containing a styrene resin" here refers to particles that do not contain the unsaturated carboxylic acid derivative compound. As stated above, in the present invention, the antiviral particles A may be 1) particles containing a styrene polymer derivative compound and an unsaturated carboxylic acid derivative compound in combination, 2) mixed particles separately comprising particles containing a styrene polymer derivative compound and particles containing an unsaturated carboxylic acid derivative compound, 3) particles containing a styrene resin, the particles of 3) being different from the particles of 1) and 2), or any combination of the particles of 1) to 3) .

The antiviral particles A of 1) and/or 2) above contain a styrene polymer derivative compound and an unsaturated carboxylic acid derivative compound. The components constituting the antiviral particles A preferably have at least one structure selected from the group consisting of hydrogen, a hydroxyl group, a carboxy group, a sulfonic acid group, a salt of a carboxy group, a salt of a sulfonic acid group, a derivative of a carboxy group, and a derivative of a sulfonic acid group. Specifically, the components preferably have at least one structure selected from the group consisting of styrene, sodium sulfonate, acrylic acid, maleic acid, and fumaric acid, and particularly preferably have both at least one structure selected from the group consisting of styrene and sodium sulfonate, and at least one structure selected from the group consisting of acrylic acid, maleic acid, and fumaric acid.

In the present invention, the content ratio of the styrene polymer derivative compound and the unsaturated carboxylic acid derivative compound in all the particles of the antiviral particles A of 1) and/or 2) above may be any ratio. In an embodiment in which antiviral performance only against enveloped viruses is required, the presence of only the styrene polymer derivative compound is sufficient. In relation to this, in an embodiment in which antiviral performance only against enveloped viruses is required, the antiviral particles A of the present invention for use may be at least 3) particles containing a styrene resin.

However, in consideration of having antiviral performance also against non-enveloped viruses, whose activity inhibition is difficult, it is preferable that the antiviral particles A of 1) and/or 2) above contain an unsaturated carboxylic acid derivative compound, in addition to a styrene polymer derivative compound. In the present invention, the mass ratio of the styrene polymer derivative compound to the unsaturated carboxylic acid derivative compound can be set, for example, to be 30:70 to 70:30, and further to be 40:60 to 60:40. That is, for the antiviral particles A of the present invention to have antiviral performance against both enveloped viruses and non-enveloped viruses, it is preferable to use the antiviral particles A of 1) and/or 2) above, which contain both a styrene polymer derivative compound and an unsaturated carboxylic acid derivative compound.

Specifically, when the antiviral particles A of 1) and/or 2) above are mixed particles separately comprising particles containing a styrene polymer derivative compound (particle Aa) and particles containing an unsaturated carboxylic acid derivative compound (particle Ab), the mass ratio of particle Aa to particle Ab can be set to be 30:70 to 70:30, and further to be 40:60 to 60:40. For the particles Aa and Ab, it is possible to directly use particles for various applications on the market, containing each component. Alternatively, it is also possible to use commercially available solvent-based products by drying and molding them into particles.

In the present invention, antiviral particles B, which are different from the antiviral particles A, may be further incorporated in addition to the antiviral particles A as long as they do not affect the effects of the present invention. The antiviral particles B are not particularly limited as long as they are antiviral particles that do not fall under the antiviral particles A specified in 1), 2), and 3) above. When the antiviral particles A and the antiviral particles B are used in combination, the mass ratio of antiviral particles A:antiviral particles B is preferably, but not limited to be, set in the range

of 10:1 to 50:40.

Although the reason that the antiviral particles A of 1) and/or 2) above exhibit antiviral properties is not constrained by the mechanisms inferred below, for example, since the influenza virus enters host cells by binding to sugar receptors on the host cell surface (the end of the sugar chain: neuraminic acid), and since copolymers containing styrenesulfonic acid salts have ionic groups similar to neuraminic acid, it is believed that they, in place of the host cells, bind to the virus and capture the virus, thereby preventing the virus from binding to the host cell receptors and thus exerting the antiviral effect. Additionally, an unsaturated carboxylic acid derivative compound is believed to generate hydroxyl groups (OH-) when it comes into contact with moisture, and the hydroxyl groups are believed to exert antiviral properties. Further, although the reason that the antiviral particles A of 3) above exhibit antiviral properties against an enveloped virus is not constrained by the mechanism, for example, it is believed to be based on action similar to that of copolymers containing styrenesulfonic acid salts described above.

In the present invention, the antiviral particles are present in the form of particles in the cured product layer. In other words, the antiviral particles are present in the form of particles without dissolving in an ink for cured product layers (the antiviral resin composition). For this reason, in the process of forming the cured product layer, the particles of the antiviral particles are more likely to emerge, and the antiviral particles can be easily distributed unevenly on one surface side of the cured product layer. Due to the uneven distribution of the antiviral particles on one surface side of the cured product layer, the amount of the antiviral particles required to achieve predetermined antiviral properties can be reduced, making it easy to suppress the decrease in the scratch resistance of the cured product layer.

In order for the antiviral particles to be easily distributed unevenly on the surface of the cured product layer, the curable resin composition is preferably selected from those that satisfy the following relationship: specific gravity of the antiviral particles < specific gravity of the curable resin composition. The use of antiviral particles with a high degree of polarity is preferred since it is easier to unevenly distribute the antiviral particles on the surface of the cured product layer. Further, when the solvent contained in the ink for cured product layers volatilizes, the antiviral particles are more likely to emerge on the surface of the cured product layer, and the antiviral particles are more easily distributed unevenly around the surface of the cured product layer.

The shape of the antiviral particles is not particularly limited and may be in the form of a sphere, an ellipse, a polyhedron, a scale, or the like.

The average particle size of the antiviral particles is preferably 0.1 to 10.0 um, more preferably 0.5 to 8.0 um, and still more preferably 1.0 to 7.0 μm.

When the average particle size is 0.1 um or more, the stability of the ink for cured product layers is easily obtained. When the average particle size is 10.0 um or less, the appearance defects due to the antiviral particles protruding from the surface of the cured product layer, and the decrease in the scratch resistance and the contamination resistance, are easily suppressed, and whitening of the coating film is easily prevented.

The average particle size of the antiviral particles is preferably within the range stated above; however, even if the antiviral particles in the ink for cured product layers agglomerate before the cured product layer is completely cured, and the particle size thus becomes visually larger, there would be no problem in exhibiting antiviral performance.

D/T, wherein D represents the average particle size of the antiviral particles, and T represents the thickness of the cured product layer, is preferably 1.0 or less, more preferably 0.7 or less, and still more preferably 0.5 or less.

When D/T is 1.0 or less, the appearance defects due to the antiviral particles protruding from the surface of the cured product layer, and the decrease in the scratch resistance and the contamination resistance, are easily suppressed, and whitening of the coating film is easily prevented.

The lower limit of D/T is not particularly limited, and is usually 0.01 or more, and preferably 0.05 or more.

In the present specification, the average particle size is a value determined as mass average value d50 in particle size distribution measurement by a laser light diffraction method.

In the present invention, the antiviral particles may have two different particle size peaks. The two different particle size peaks are, for example, based on a combined use of two or more different antiviral particles having different components (and thus having different particle sizes). Specifically, the two different particle size peaks may be based on combinations of the antiviral particles A of 1) to 3) above, or may be based on further incorporation of the antiviral particles B in addition to the antiviral particles A.

The content of the antiviral particles A is preferably 0.5 to 20.0 parts by mass, more preferably 1.0 to 13.0 parts by mass, and still more preferably 3.0 to 10.0 parts by mass, per 100 parts by mass of the cured product.

When the content of the antiviral particles A is 0.5 parts by mass or more, excellent antiviral properties are easily obtained.

When the content of the antiviral particles A is 20.0 parts by mass or less, the decrease in the coating film properties, such as coating film strength and scratch resistance, can be suppressed. Furthermore, when the content of the antiviral particles is 20.0 parts by mass or less, the decrease in the contamination resistance due to the antiviral particles protruding from the surface of the cured product layer is easily suppressed, and whitening of the coating film is easily prevented.

Additives

The cured product layer may comprise additives, such as a phenyl ether derivative compound, an antioxidant, a light stabilizer, an ultraviolet absorber, an extender pigment, an antibacterial agent, an anti-allergen agent, an anti-mold agent, a flame retardant, a lubricant, a foaming agent, and a deodorant.

Phenyl Ether Derivative Compound

A phenyl ether derivative compound may be contained in the cured product layer to complement the antiviral performance.

Examples of phenyl ether derivative compounds include polyoxyethylene alkyl ethers, which are known to be able to exhibit antiviral performance as ether-type nonionic surfactants.

The content of the phenyl ether derivative compound is preferably 0.1 to 5.0 parts by mass per 100 parts by mass of the cured product. When the content is 0.1 parts by mass or more, the antiviral performance of the cured product layer can be complemented, and when the content is 5.0 parts by mass or less, the surface performance of the cured product layer, such as scratch resistance and contamination resistance, can be maintained.

Antioxidant

Examples of antioxidants include phosphorus-based antioxidants, sulfur-based antioxidants, and phenol-based antioxidants.

The content of the antioxidant is preferably 0.1 to 10 parts by mass, more preferably 0.3 to 5 parts by mass, and still more preferably 0.5 to 3.0 parts by mass, per 100 parts by mass of the cured product.

Light Stabilizer

Examples of light stabilizers include aromatic compounds, amine-based compounds, organic acid-based compounds, catechin-based compounds, and hindered amine-based compounds. Of these, hindered amine-based compounds are preferred. Hindered amine-based compounds are those having a structure with a 2,2,6,6-tetramethylpiperidine skeleton in the molecule.

The content of the light stabilizer is preferably 0.1 to 10 parts by mass, more preferably 0.3 to 8.0 parts by mass, and still more preferably 1.0 to 5.0 parts by mass, per 100 parts by mass of the cured product. As a light stabilizer, it is preferable to contain a hindered amine-based compound in the range stated above.

Ultraviolet Absorber

Examples of ultraviolet absorbers include benzotriazole-based ultraviolet absorbers, benzophenone-based ultraviolet absorbers, triazine-based ultraviolet absorbers, and the like. Preferred are triazine-based ultraviolet absorbers. The ultraviolet absorbers may be used singly or in a combination of two or more.

Of triazine-based ultraviolet absorbers, more preferred is a hydroxyphenyltriazine-based ultraviolet absorber, in which three of at least one organic group selected from a hydroxyphenyl group, an alkoxyphenyl group, and an organic group containing these groups are linked to the triazine ring, and still more preferred is a hydroxyphenyltriazine-based ultraviolet absorber represented by the following formula (A). Hydroxyphenyltriazine-based ultraviolet absorbers have a branched structure and are thus expected to be less likely to be bled out from the cured product layer, whereby excellent weather resistance is obtained for a longer period of time.

Further, ultraviolet absorbers containing an ethylenic double bond, such as (meth)acryloyl, vinyl, and allyl groups, are preferred because bleeding out is easily suppressed.

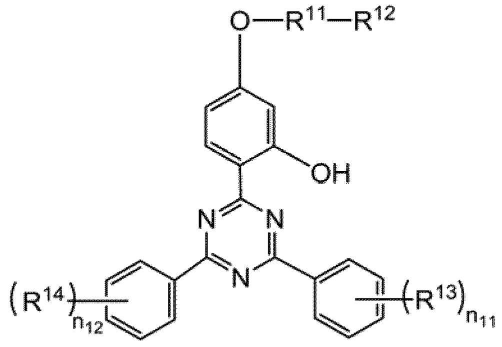

(A)

In formula (A), $R^{11}$ is a divalent organic group; $R^{12}$ is an ester group represented by -C(=O)OR$^{15}$; $R^{13}$, $R^{14}$, and $R^{15}$ each independently represent a monovalent organic group; and $n_{11}$ and $n_{12}$ are each independently an integer of 1 to 5.

Examples of the divalent organic group represented by $R^{11}$ include aliphatic hydrocarbon groups, such as alkylene and alkenylene groups. From the viewpoint of weather resistance, alkylene groups are preferred, and the number of carbon atoms thereof is preferably 1 or more and 20 or less, more preferably 1 or more and 12 or less, still more preferably 1 or more and 8 or less, and particularly preferably 1 or more and 4 or less. Alkylene and alkenylene groups may be linear, branched, or cyclic, and linear or branched alkylene and alkenylene groups are preferred.

Examples of alkylene groups having 1 or more and 20 or less carbon atoms include methylene, 1,1-ethylene, 1,2-ethylene, 1,3-propylene, 1,2-propylene, 2,2-propylene, and various other propylene groups (below, "various" refers to linear and branched forms, including isomer forms thereof), various butylene groups, various pentylene groups, various hexylene groups, various heptylene groups, various octylene groups, various nonylene groups, various decylene groups, various undecylene groups, various dodecylene groups, various tridecylene groups, various tetradecylene groups, various pentadecylene groups, various hexadecylene groups, various heptadecylene groups, various octadecylene groups, various nonadecylene groups, and various icosylene groups.

Examples of the monovalent organic groups represented by $R^{13}$ and $R^{14}$ include alkyl, alkenyl, cycloalkyl, aryl, arylalkyl, and other groups. Preferred are aromatic hydrocarbon groups, such as aryl and arylalkyl groups, and more preferred is an aryl group. In particular, the monovalent organic group represented by $R^{13}$ and $R^{14}$ is preferably a phenyl group.

Aryl groups preferably have 6 or more and 20 or less carbon atoms, more preferably 6 or more and 12 or less carbon atoms, and still more preferably 6 or more and 10 or less carbon atoms. Examples include a phenyl group, various methylphenyl groups, various ethylphenyl groups, various dimethylphenyl groups, various propylphenyl groups, various trimethylphenyl groups, various butylphenyl groups, various naphthyl groups, and the like. Arylalkyl groups preferably have 7 or more and 20 or less carbon atoms, more preferably 7 or more and 12 or less carbon atoms, and still more preferably 7 or more and 10 or less carbon atoms. Examples include a benzyl group, a phenethyl group, various phenylpropyl groups, various phenylbutyl groups, various methylbenzyl groups, various ethylbenzyl groups, various propylbenzyl groups, various butylbenzyl groups, various hexylbenzyl groups, and the like.

Examples of the monovalent organic groups represented by $R^{15}$ include alkyl, alkenyl, cycloalkyl, aryl, arylalkyl, and other groups. Preferred are aliphatic hydrocarbon groups, such as alkyl and alkenyl groups, and more preferred is an alkyl group. Specifically, $R^{12}$ is preferably an alkyl ester group or alkenyl ester group, and more preferably an alkyl ester group.

Alkyl groups preferably have 1 or more and 20 or less carbon atoms, more preferably 2 or more and 16 or less carbon atoms, and still more preferably 6 or more and 12 or less carbon atoms. Examples include a methyl group, an ethyl group, various propyl groups, various butyl groups, various pentyl groups, various hexyl groups, various octyl groups, various nonyl groups, various decyl groups, various undecyl groups, various dodecyl groups, various dodecyl groups, various tridecyl groups, various tetradecyl groups, various pentadecyl groups, various hexadecyl groups, various heptadecyl groups, various octadecyl groups, various nonadecyl groups, and various icosyl groups.

Alkenyl groups preferably have 2 or more and 20 or less carbon atoms, more preferably 3 or more and 16 or less carbon atoms, and still more preferably 6 or more and 12 or less carbon atoms. Examples include a vinyl group, various propenyl groups, various butenyl groups, various pentenyl groups, various hexenyl groups, various octenyl groups, various nonenyl groups, various decenyl groups, various undecenyl groups, various dodecenyl groups, various tridecenyl groups, various tetradecenyl groups, various pentadecenyl groups, various hexadecenyl groups, various heptadecenyl groups, various octadecenyl groups, various nonadecenyl groups, and various icosenyl groups.

More specifically, the hydroxyphenyltriazine compound represented by formula (A) is preferably

a hydroxyphenyltriazine compound in which $R^{11}$ is an alkylene group having 1 or more and 20 or less carbon atoms, $R^{12}$ and $R^{15}$ are each an alkyl ester group, which is an alkyl group having 1 or more and 20 or less carbon atoms, $R^{13}$ and $R^{14}$ are each an aryl group having 6 or more and 20 or less carbon atoms, and $n_{11}$ and $n_{12}$ are each 1; more preferably

a hydroxyphenyltriazine compound in which $R^{11}$ is an alkylene group having 1 or more and 12 or less carbon atoms, $R^{12}$ and $R^{15}$ are each an alkyl ester group, which is an alkyl group having 2 or more and 16 or less carbon atoms, $R^{13}$ and $R^{14}$ are each an aryl group having 6 or more and 12 or less carbon atoms, and $n_{11}$ and $n_{12}$ are each 1; still more preferably

a hydroxyphenyltriazine compound in which $R^{11}$ is an alkylene group having 1 or more and 8 or less carbon atoms, $R^{12}$ and $R^{15}$ are each an alkyl ester group, which is an alkyl group having 6 or more and 12 or less carbon atoms, $R^{13}$ and $R^{14}$ are each an aryl group having 6 or more and 10 or less carbon atoms, and $n_{11}$ and $n_{12}$ are each 1; and particularly preferably

a hydroxyphenyltriazine compound in which $R^{11}$ is an alkylene group having 1 or more and 4 or less carbon atoms, $R^{12}$ and $R^{15}$ are each an ester group, which is an alkyl group having 8 carbon atoms, $R^{13}$ and $R^{14}$ are each a phenyl group, and $n_{11}$ and $n_{12}$ are each 1.

The content of the ultraviolet absorber is preferably 0.2 to 10.0 parts by mass, more preferably 0.5 to 5.0 parts by mass, and still more preferably 1.0 to 4.0 parts by mass, per 100 parts by mass of the cured product.

Extender Pigment

Extender pigments may be, for example, inorganic particles and/or organic particles. An extender pigment may be added, for example, for the purposes of adjusting the designability of the antiviral article and imparting scratch resistance, wear resistance, etc.

Examples of inorganic particles include silica, alumina, silicon carbide, silicon nitride, boron nitride, calcium titanate, barium titanate, magnesium pyroborate, zinc oxide, zirconium oxide, chromium oxide, iron oxide, diamond, vigilant sand, glass fiber, calcium carbonate, aluminosilicate, barium sulfate, and the like. Examples of organic particles includes polyethylene, urethane resin, polycarbonate, polyamide (nylon), and the like.

Antibacterial Agent

Antibacterial agents include inorganic antibacterial agents and organic antibacterial agents. Inorganic antibacterial agents are particularly desirable because they are generally safer, more durable, and more heat-resistant than organic antibacterial agents. Inorganic antibacterial agents are agents in which antibacterial metals, such as copper and zinc, including silver, are supported on various inorganic carriers. The content of the antibacterial agent is preferably 0.1 to 10 parts by mass per 100 parts by mass of the cured product; however, the details can be suitably adjusted according to the type of antibacterial agent.

Anti-allergen Agent

An anti-allergen agent contains either an inorganic compound or an organic compound; each of them may be used singly, or a mixture of two or more different types may be used. The inorganic compound is preferably a metal-supported material. The content of the anti-allergen agent is preferably 0.1 to 10 parts by mass per 100 parts by mass of the cured product; however, the details can be suitably adjusted according to the type of anti-allergen agent.

The inorganic material of the inorganic compound is preferably, for example, at least one member selected from the group consisting of titanium oxide, calcium phosphate, calcium silicate, zirconium phosphate, zeolite, silica alumina, magnesium silicate, and magnesium phosphate, among which preferred are titanium oxide, zirconium phosphate, etc.

The metal supported on the inorganic material is preferably, for example, at least one member selected from the group consisting of gold, silver, platinum, zinc, and copper, among which preferred are silver, zinc, etc. Preferred examples of commercial products include Parafine ANV-100 (silver-supported inorganic compound) produced by Ohara Paragium Chemical Co., Ltd., Atomy Ball TZ-R (zinc-supported titanium oxide) produced by JGC Catalysts and Chemicals Ltd., and the like. These anti-allergen agents effectively act against various allergens, such as mites and pollen.

The organic compound is preferably a phenolic hydroxyl group-containing water-insoluble polymer, a polyphenol compound supported on inorganic solid acid, or a polymer containing at least one monomer component selected from the group consisting of styrene sulfonic acid and salts thereof.

As the phenolic hydroxyl group-containing water-insoluble polymer, examples of commercial products include Aller Buster (trade name) produced by Sekisui Chemical Co., Ltd., Marcalinker M (trade name) produced by Maruzen

Petrochemical Co., Ltd., and the like. Further, examples of the combination of a polyphenol compound and a zirconium compound include AlleRemove (trade name) produced by Toagosei Co., Ltd., and the like. These anti-allergen agents effectively act against various allergens, such as mites and pollen.

As at least one monomer component selected from the group consisting of styrene sulfonic acid and salts thereof, the materials described in JP6136433B can be used.

In addition, when an organic compound and an inorganic compound are mixed, for example, an anionic phenolic material and an anti-allergic zinc-based material can be used.

Examples of the anionic phenolic material include tannin, tannic acid-tartar emetic, phenol sulfonic acid formaldehyde resin, sulfone compounds of novolac resin, methanesulfonic acid of novolac resin, methanesulfonic acid of resol resin, benzylated phenol sulfonic acid, thiophenolic compounds, dihydroxydiphenyl sulfone-based compounds, ligand compounds, and metal chelate compounds thereof, which can be suitably selected for use.

The zinc-based material is suitably selected from water-soluble zinc compounds or water-insoluble zinc compounds, zinc/metal oxide composite materials, and the like. Preferably, water-insoluble zinc compound and/or water-insoluble zinc/metal oxide composite particles are dispersed in water, the particle size is 50 um or less, and the metal oxide contains at least one of titania, silica, and alumina.

Thickness

The thickness of the cured product layer is preferably 1.5 um or more and 30 um or less, more preferably 2 um or more and 20 um or less, and still more preferably 3 um or more and 15 um or less, from the viewpoint of the balance between processability and scratch resistance.

Formation Method

The cured product layer can be formed, for example, by applying an ink for cured product layers, the ink containing materials that constitute the cured product layer (e.g., a curable resin composition and antiviral particles) and optionally a solvent etc., to a base material, followed by drying and curing. Alternatively, the cured product layer may also be formed by applying an ink for cured product layers to a base material having release properties, drying and curing it, and then transferring the resulting cured product layer to another base material, etc.

By forming the cured product layer by applying an ink for cured product layers, the ink containing materials that constitute the cured product layer (e.g., a curable resin composition and antiviral particles) and a solvent etc., to a base material, followed by drying and curing, as described above, the antiviral particles are likely to emerge on the surface of the cured product layer when the solvent volatilizes, thus easily making it possible to unevenly distribute the antiviral particle around the surface of the cured product layer.

Laminate Configuration

The antiviral article of the present invention may be formed of a single layer of the cured product layer or may also comprise layers other than the cured product layer.

The antiviral article formed of a single layer of the cured product layer can be obtained, for example, by producing a laminate in which the cured product layer is formed on a base material having release properties, and then peeling off the base material having release properties from the laminate.

Examples of the layers other than the cured product layer of the antiviral article include a base material, a primer layer, an ornamental layer, a transparent resin layer, an adhesive layer, and the like. Examples of the laminate configuration of the antiviral article include the following (1) to (12). In (1) to (12) below, a slash ("/") indicates the interface of each layer.

Examples of the layers other than the cured product layer of the antiviral article also include magnetic layers for magnetic recording applications; electric conductive layers that function as a circuit, a copper wire for electric current, or an electromagnetic shielding layer; gas barrier layers that inhibit the permeation of gases, such as water vapor and oxygen; light-reflecting layers that reflect visible light with high reflectance; antireflection layers that inhibit the reflection of visible light; and other functional layers. These functional layers can be formed at any position in laminate configurations (1) to (12) below, depending on the function of each layer.

(1) Cured product layer
(2) Base material/cured product layer
(3) Base material/primer layer/cured product layer
(4) Base material/ornamental layer/cured product layer
(5) Base material/transparent resin layer/cured product layer

(6) Base material/adhesive layer/transparent resin layer/cured product layer
(7) Base material/adhesive layer/ornamental layer/transparent resin layer/cured product layer
(8) Base material/ornamental layer/adhesive layer/transparent resin layer/cured product layer
(9) Base material/transparent resin layer/primer layer/cured product layer
(10) Base material/adhesive layer/transparent resin layer/primer layer/cured product layer
(11) Base material/adhesive layer/ornamental layer/transparent resin layer/primer layer/cured product layer
(12) Base material/ornamental layer/adhesive layer/transparent resin layer/primer layer/cured product layer

In the above laminate configurations, the adhesive layer may be any viscous layer. An adhesive layer or a viscous layer may be further provided on the back surface of the base material.
The antiviral article preferably comprises the cured product layer on a base material from the viewpoint of ease of handling.

Base Material

The base material may be, but is not particularly limited to being, for example, in the form of a flat plate, such as a film, a sheet, or a plate, or in a three-dimensional form, such as a polyhedron, a polygonal prism, a cylinder, a sphere, or a spheroid.
Films, sheets, and plates are often referred to as "films," "sheets," and "plates" in order from thinnest; however in the present specification, these three are not distinguished from each other unless otherwise noted.
Examples of the materials constituting the base material include resins, metals, non-metallic inorganic materials, fibrous materials, wood-based materials, and the like, which can be suitably selected according to the application.
The base material may be formed of a single layer or may be a laminate in which two or more layers composed of the above materials are laminated. When the base material is a laminate of two or more layers, the base material is preferably a laminate of two or more layers of different materials, with the performances of the materials in each layer complementing each other. Examples of the base material in which two or more layers are laminated include the following A to J. The slash ("/") indicates the interface of each layer.

(A) Resin/wood-based material
(B) Resin/metal
(C) Resin/fibrous material
(D) Resin/non-metallic inorganic material
(E) Resin 1/resin 2
(F) Metal/wood-based material
(G) Metal/non-metallic inorganic material
(H) Metal/fibrous material
(I) Metal 1/metal 2
(J) Non-metallic inorganic material/fibrous material

In (E) above, the resin 1 and resin 2 represent different types of resins. (For example, the resin 1 is an olefin resin, and the resin 2 is an acrylic resin.) In (H) above, the metal 1 and metal 2 represent different types of metals. (For example, the metal 1 is copper, and the metal 2 is chromium.)
When the base material is a laminate as in (A) to (J) above, the laminate may contain a layer for strengthening adhesive force (e.g., an adhesive layer) between the layers constituting the laminate.
Examples of resins for use as the base material include those comprising various synthetic or natural resins. Synthetic resins for use may be thermoplastic resins and curable resins.
Examples of thermoplastic resins include olefin resins, such as polyethylene, polypropylene, polymethylpentene, ionomers, and various olefin-based thermoplastic elastomers;

vinyl chloride-based resins, such as polyvinyl chloride, polyvinylidene chloride, and vinyl chloride-vinyl acetate copolymers;
polyester resins, such as polyethylene terephthalate, polybutylene terephthalate, polyethylene naphthalate, ethylene glycol-terephthalic acid-isophthalic acid copolymers, and polyester-based thermoplastic elastomers;
acrylic resins, such as polymethyl(meth)acrylate, polyethyl(meth)acrylate, polybutyl(meth)acrylate, and methyl(meth)acrylate-butyl(meth)acrylate copolymers;
polyamide resins represented by nylon 6, nylon 66, or the like; cellulose-based resins, such as cellulose triacetate, cellophane, and celluloid;
styrene-based resins, such as polystyrene, acrylonitrile-styrene copolymers, and acrylonitrile-butadiene-styrene

(ABS) copolymers; and polyvinyl alcohol, ethylene-vinyl acetate copolymers, ethylene-vinyl alcohol copolymers, polycarbonate resins, polyarylate resins, polyimide resins, and the like.

Curable resins may be, for example, the thermosetting resins and/or ionizing radiation-curable resins described as examples in the descriptions for the cured product layer.

Examples of natural resins include natural rubber, pine resin, amber, and the like.

Examples of metals for use as the base material include aluminum or an alloy containing aluminum, such as duralumin, iron or an alloy containing iron, such as carbon steel or stainless steel, copper or an alloy containing copper, such as brass or bronze, and gold, silver, chromium, nickel, cobalt, tin, titanium, and the like. These metals may be, for example, plated for use as a metal base material.

Examples of non-metallic inorganic materials for use as the base material include those composed of non-ceramic-based materials, such as cement, ALC (autoclaved lightweight aerated concrete), gypsum, calcium silicate, and wood-chip cement; ceramic-based materials, such as pottery, earthenware, glass, and porcelain enamel; natural stone, such as limestone (including marble), granite, and andesite; and the like.

Examples of fibrous materials for use as the base material include paper, such as thin paper, kraft paper, fine-quality paper, Japanese paper, titanium paper, linter paper, sulfuric acid paper, paraffin paper, parchment paper, glassine paper, lining paper for wallpaper, paperboard, and base paper for gypsum board; and woven or non-woven fabrics made of polyester resin fiber, acrylic resin fiber, protein-based or cellulose-based natural fiber (e.g., silk, cotton, and hemp), glass fiber, and carbon fiber. To increase the strength between fibers in the paper base material or increase the interlayer strength between the paper and other layers, resin, such as acrylic resin, styrene-butadiene rubber, melamine resin, or urethane resin, may be further added (impregnated after paper making or inserted during papermaking) with respect to such paper to prevent fluffing. Examples of paper to which resin has been added include inter-paper reinforced paper, resin-impregnated paper, and the like.

Examples of the base material of a laminate in which a resin layer is laminated on a fibrous material layer include wallpaper original fabric etc. in which a resin layer, such as a vinyl chloride resin layer, olefin resin layer, or acrylic resin layer, is laminated on the surface of lining paper for wallpaper, which is often used in the field of building materials.

The shape and size of the base material are not particularly limited and may be suitably selected according to the application, desired performance, and processability.

When the base material is in the form of a flat plate, such as a film, a sheet, or a plate, the thickness is a typical size for the design of the article. The thickness is also not particularly limited. Typically, however, the thickness is about 10 um or more and 10 cm or less from the viewpoint of processability in manufacturing, mechanical strength, ease of use and handling, and economic efficiency. When the base material is in the form of a film or sheet, the thickness is usually selected from about 20 um or more and 300 um or less, and when the base material is in the form of a plate, the thickness is usually selected from about 1 mm or more and 2 cm and less.

In order to improve adhesion with other layers that constitute the antiviral article, or to improve adhesion between the antiviral article and the material to be laminated, one surface or both surfaces of the base material may be subjected to surface treatment, such as physical surface treatment (e.g., an oxidation method or a projection-and-depression formation method) or chemical surface treatment.

Examples of oxidation methods include corona discharge treatment, chromium oxidation treatment, flame treatment, hot-air treatment, ozone-ultraviolet treatment, and the like. Examples of projection-and-depression formation methods include sandblasting, solvent treatment, and the like. These surface treatment methods are suitably selected according to the type of base material. Typically, corona discharge treatment is preferred in terms of the effect and operability of the surface treatment.

Primer Layer

The antiviral article preferably comprises a primer layer that is in contact with the surface of the cured product layer on the base material side. The primer layer improves adhesion between the base material and the cured product layer, and easily achieves long-term interlayer adhesion when exposed to ultraviolet rays (i.e., weather resistant adhesion) and excellent scratch resistance.

The primer layer mainly comprises a binder resin and optionally comprises additives, such as an ultraviolet absorber and a light stabilizer.

Preferable examples of binder resins include urethane resins, acrylic polyol resins, acrylic resins, ester resins, amide resins, butyral resins, styrene resins, urethane-acrylic copolymers, polycarbonate-based urethane-acrylic copolymers (urethane-acrylic copolymers derived from a polymer (polycarbonate polyol) having a carbonate bond in the polymer main chain and two or more hydroxyl groups in the terminal and side chains), vinyl chloride-vinyl acetate copolymer resins, vinyl chloride-vinyl acetate-acrylic copolymer resins, chlorinated propylene resins, nitrocellulose resins

(nitrocellulose), cellulose acetate resins, and other resins. These may be used singly or in a combination of two or more. Alternatively, the binder resin may be one obtained by adding a curing agent, such as an isocyanate-based curing agent or an epoxy-based curing agent, to these resins, followed by crosslinking and curing. Of these, preferred are those obtained by crosslinking and curing a polyol-based resin, such as acrylic polyol resin, with an isocyanate-based curing agent, and more preferred are those obtained by crosslinking and curing an acrylic polyol resin with an isocyanate-based curing agent.

The primer layer preferably contains an ultraviolet absorber and/or a light stabilizer to further improve weather resistance. General-purpose ultraviolet absorbers and general-purpose light stabilizers may be used.

The thickness of the primer layer is preferably 0.01 um or more and 10 um or less, more preferably 0.7 um or more and 8 um or less, and still more preferably 1.0 um or more and 6 um or less.

The antiviral article may comprise a back-side primer layer on the base material on the side opposite to the cured product layer, for example, for the purpose of improving adhesion to an adherend.

Further, the antiviral article may comprise a viscous layer on the base material on the side opposite to the cured product layer, for the purpose of bonding with an adherend. It is preferable to form a peelable separator on the viscous layer on the side opposite to the base material.

Transparent Resin Layer

The antiviral article may comprise a transparent resin layer between the base material and the cured product layer, for example, for the purpose of improving strength. In particular, when the base material is a resin base material, a transparent resin layer is preferably provided.

When the antiviral article comprises a primer layer, the transparent resin layer is preferably located between the base material and the primer layer. When the antiviral article comprises an ornamental layer, the transparent resin layer is preferably located between the ornamental layer and the cured product layer, from the viewpoint of protecting the ornamental layer.

Examples of resins that constitute the transparent resin layer include polyolefin-based resins, polyester resins, polycarbonate resins, acrylonitrile-butadiene-styrene resins (also referred to below as "ABS resins"), acrylic resins, vinyl chloride resins, and the like. Of these, polyolefin-based resins are preferred from the viewpoint of processability. Two or more of these resins in the examples may be laminated or mixed together for use.

The content of the polyolefin-based resin in the transparent resin layer is preferably 50 mass% or more, more preferably 70 mass% or more, and still more preferably 90 mass% or more, based on the total resin components of the transparent resin layer, from the viewpoint of processability.

Examples of polyolefin-based resins in the transparent resin layer include polyethylene (low-density, medium-density, and high-density), polypropylene, polymethylpentene, polybutene, ethylene-propylene copolymers, propylene-butene copolymers, ethylene-vinyl acetate copolymers, ethylene-acrylic acid copolymers, ethylene-propylene-butene copolymers, and the like. Of these, polyethylene (low-density, medium-density, and high-density), polypropylene, ethylene-propylene copolymers, and propylene-butene copolymers are preferred, and polypropylene is more preferred.

The transparent resin layer may comprise additives, such as an ultraviolet absorber, a light stabilizer, a colorant, and the like.

The thickness of the transparent resin layer is preferably 20 um or more and 150 um or less, more preferably 40 um or more and 120 um or less, and still more preferably 60 um or more and 100 um or less, from the viewpoint of the balance between scratch resistance, processability, and weather resistance.

Ornamental Layer

The antiviral article preferably comprises an ornamental layer at any position in the antiviral article from the viewpoint of improving designability.

The position of the ornamental layer is preferably on the side closer to the base material from the viewpoint of improving weather resistance of the ornamental layer. For example, when the antiviral article comprises a primer layer, the ornamental layer is preferably located between the base material and the primer layer. When the antiviral article comprises a transparent resin layer, the ornamental layer is preferably located between the base material and the transparent resin layer.

The ornamental layer may be formed on the entire surface of the antiviral article or may be formed only partially. In an embodiment in which the ornamental layer covers the outer surface of the cured product layer, the ornamental layer is preferably formed only on a part of a region so as not to interfere with the antiviral properties.

Examples of the ornamental layer include a coloring layer obtained by applying an ink solidly; a picture layer obtained by printing a pattern with an ink; a metallic thin film; and the like.

Examples of pictures (patterns) expressed in the ornamental layer include wood-grain patterns, such as annual

rings and vessel grooves on the surface of a wood board; marble grain patterns on a stone sheet surface, such as marble and granite; textile patterns on a fabric surface; leather grain patterns on a leather surface; tiled patterns, including joint grooves; brick masonry patterns, including joint grooves; pebbly patterns; matte patterns; patterns of arrays of projection and depression sections extending parallel to each other (i.e., linear-streak projection and depression patterns or light-ray engraved patterns); abstraction patterns, such as geometric patterns, letters, figures, polka dots, and floral patterns; and the like.

Inks used for the coloring layer and the picture layer are those obtained by suitably mixing a binder resin with a colorant, such as a pigment or a dye, an extender pigment, a solvent, a stabilizer, a plasticizer, a catalyst, a curing agent, an ultraviolet absorber, a light stabilizer, and the like.

Examples of binder resins for the coloring layer and the picture layer include, but are not particularly limited to, urethane resins, acrylic polyol resins, acrylic resins, ester resins, amide resins, butyral resins, styrene resins, urethane-acrylic copolymers, vinyl chloride-vinyl acetate copolymer resins, vinyl chloride-vinyl acetate-acrylic copolymer resins, chlorinated propylene resins, nitrocellulose resins, cellulose acetate resins, and other resins. In addition, various types of resins can be used, such as one-component curable resins and two-component curable resins with a curing agent such as an isocyanate compound.

Examples of colorants include, but are not particularly limited to, inorganic pigments, such as carbon black (India ink), iron black, titanium white, antimony white, chrome yellow, titanium yellow, red iron oxide, cadmium red, ultramarine blue, and cobalt blue; organic pigments or dyes, such as quinacridone red, isoindolinone yellow, nickel-azo complexes, phthalocyanine blue, and azomethine azo black; metallic pigments made of a flaky foil strip of aluminum, brass, or the like; pearlescent pigments made of a flaky foil strip of titanium dioxide-coated mica, basic lead carbonate, or the like; and the like.

The content of the colorant is preferably 5 parts by mass or more and 90 parts by mass or less, more preferably 15 parts by mass or more and 80 parts by mass or less, and still more preferably 30 parts by mass or more and 70 parts by mass or less, per 100 parts by mass of the resin that constitutes the coloring layer and the picture layer.

The coloring layer and the picture layer may comprise additives, such as an ultraviolet absorber, a light stabilizer, and a colorant.

The thickness of the coloring layer and the picture layer may be suitably selected according to the desired pattern. The thickness is preferably 0.5 um or more and 20 um or less, more preferably 1 um or more and 10 um or less, and still more preferably 2 um or more and 5 um or less, from the viewpoint of masking the ground color of an adherend and improving designability.

Examples of metallic thin films include thin films of single metal elements, such as gold, silver, copper, tin, iron, nickel, chromium, cobalt, indium, and aluminum; thin films of alloys containing two or more of these metal elements; and the like. Examples of alloys include brass, bronze, stainless steel, and the like.

The film thickness of the metal thin film may be about 0.1 $\mu$m to 1 $\mu$m.

Adhesive Layer

The antiviral article may comprise an adhesive layer.

For example, when the antiviral article comprises a transparent resin layer, an adhesive layer is preferably formed between the base material and the transparent resin layer in order to improve adhesion between these two layers.

When an ornamental layer is further provided between the base material and the transparent resin layer, the positional relationship between the adhesive layer and the ornamental layer is not particularly limited. Specifically, the ornamental layer, the adhesive layer, and the transparent resin layer may be provided in this order from the side closest to the base material. Alternatively, the adhesive layer, the ornamental layer, and the transparent resin layer may be provided in this order from the side closest to base material.

Further, as sated above, when the base material is a laminate of two or more layers, an adhesive layer may be provided between each layer that constitute the base material.

For example, the adhesive layer may be formed of an adhesive, such as a urethane-based adhesive, an acrylic adhesive, an epoxy-based adhesive, and a rubber-based adhesive. Of these adhesives, urethane-based adhesives are preferred in terms of adhesive force.

Examples of urethane-based adhesives include adhesives that use two-component curable urethane resins containing various polyol compounds, such as polyether polyol, polyester polyol, and acrylic polyol, and a curing agent, such as an isocyanate compound.

The thickness of the adhesive layer is preferably 0.1 um or more and 30 um or less, more preferably 1 um or more and 15 um or less, and still more preferably 2 um or more and 10 um or less.

The ornamental layer, the adhesive layer, and the primer layer described above can be formed by applying coating liquids containing compositions that form each layer by known methods, such as gravure printing, bar coating, roll coating, reverse roll coating, and comma coating, and optionally performing drying and curing.

Shaping Treatment

The antiviral article may be subjected to embossing or other shaping treatment to form a desired projection and depression shape (also referred to as a "projection and depression pattern").

For embossing, for example, the antiviral article is preferably heated to 80°C or more and 260°C or less, more preferably 85°C or more and 200°C or less, and still more preferably 100°C or more and 180°C or less, and an embossing plate is pressed onto the antiviral article. The part onto which an embossed plate is pressed is preferably on the cured product layer side of the antiviral article.

Application

The antiviral article of the present invention can be used for various applications. Examples of specific applications include the following (1) to (12).

(1) Surface materials for interior parts, such as walls, floors, and ceilings of buildings such as houses, offices, stores, hospitals, and clinics.
(2) Surface materials for exterior parts, such as outer walls, roofs, soffits, and door pockets of buildings such as houses, offices, stores, hospitals, and clinics.
(3) Surface materials for fittings such as windows, window frames, doors, and door frames (interior or exterior parts); surface materials for accessories of fittings (e.g., handles); surface materials for jigs of fittings.
(4) Surface materials for handrails, wainscots, crown moldings, sills, lintels, and coping fixtures.
(5) Surface materials for outdoor (exterior) parts, such as fences, gates, pillars for drying racks, and handrails.
(6) Surface materials for furniture such as wardrobes, desks, chairs, cupboards, and kitchen sinks; surface materials for accessories of furniture (e.g., handles); surface materials for jigs of furniture.
(7) Surface materials for housings of various home appliances, such as television receivers, radio receivers, refrigerators, microwave ovens, washing machines, fans, and air conditioners; surface materials for home appliance accessories (e.g., handles, switches, and touch screens); surface materials for jigs of home appliances.
(8) Surface materials for office automation equipment, such as electronic copiers, facsimiles, printers, and computer equipment (e.g., personal computers); surface materials for housing of various office automation equipment, such as automatic teller machines of financial institutions, such as banks and post offices; surface materials for accessories of various office automation equipment (e.g., keyboards and touch screens); surface materials for jigs of various office automation equipment.
(9) Surface material for interior or exterior parts of vehicles, such as automobiles, railway vehicles, ships, and aircrafts (walls, floors, ceilings, handrails, struts, operating panels, levers, handles, steering wheels, and other operating devices).
(10) Partitions in various buildings; shielding plates or shielding curtains to prevent droplet transmission of viruses at counters or payment counters of stores, offices, government offices, etc.; face protection equipment such as protective masks (face guards) and safety glasses (goggles); and surface materials thereof.
(11) Business forms such as slips; bankbooks; cash cards, credit cards, point cards, etc. of financial institutions; and surface materials thereof.
(12) Bottles of glass, resin, etc.; metal cans; flexible resin packaging materials such as resin retort containers; packaging materials such as various tubes; and surface materials thereof.

Formation of Various Additives Contained in Layers of Antiviral Articles into Vesicles

The antiviral article of the present invention may be formed of a single layer of the cured product layer or may comprise layers other than the cured product layer, as described above. However, the various additives contained in each layer are preferably in the form of vesicles. Examples of the method for forming various additives into vesicles are not particularly limited, and known methods may be used to form the vesicles. Among various methods, a supercritical reverse phase evaporation method is preferred.

Examples of the vesicle formation method include the Bangham method, an extrusion method, a hydration method, a reverse phase evaporation method, and a freeze-thaw method, in addition to the supercritical reverse phase evaporation method. These vesicle formation methods are briefly described below. In the Bangham method, chloroform or a chloroform/methanol mixed solvent is placed in a container such as a flask, and a phospholipid is further added and dissolved therein; then, the solvent is removed with an evaporator to form a thin film of the phospholipid; and after a dispersion of additives is added, the mixture is hydrated and dispersed with a vortex mixer to thereby obtain vesicles. In the extrusion method, a phospholipid solution for a thin film is prepared, and the solution is passed through a filter in place of the mixer used as an external agitator in the Bangham method, thereby obtaining vesicles. In the hydration

method, which is almost the same preparation method as the Bangham method, the mixture is gently stirred for dispersion, without using a mixer, to obtain vesicles. In the reverse phase evaporation method, a phospholipid is dissolved in diethyl ether or chloroform, a solution containing additives is added thereto to form a W/O emulsion, the organic solvent is removed from the emulsion under reduced pressure, and then water is added to thereby obtain vesicles. In the freeze-thaw method, cooling and heating is used as an external agitation, and cooling and heating is repeated to obtain vesicles.

The supercritical reverse phase evaporation method is described in detail below. The supercritical reverse phase evaporation method refers to a method of adding an aqueous phase containing various additives as water-soluble or hydrophilic encapsulation materials to a mixture in which a material for forming the outer membrane of the vesicle is evenly dissolved in carbon dioxide in a supercritical state or carbon dioxide at a temperature or pressure condition equal to or greater than the supercritical point, thereby forming a capsule-like vesicle in which the various additives as encapsulation materials are encapsulated with a single membrane. "Carbon dioxide in a supercritical state" refers to carbon dioxide in a supercritical state at a temperature equal to or greater than the critical temperature (30.98°C), and a pressure equal to or greater than the critical pressure (7.3773+0.0030 MPa); and "carbon dioxide at a temperature or pressure condition equal to or greater than the critical point" refers to carbon dioxide under a condition in which only the critical temperature or only the critical pressure exceeds the critical condition. This method can produce a single-walled lamellar vesicle having a diameter of 50 to 800 nm. "Vesicle" is the general name of a folliculus having a spherically closed membrane structure containing a liquid phase. In particular, those having an outer membrane formed of a biological lipid, such as a phospholipid, are called "liposomes."

Examples of phospholipids include phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, hydrogenated soybean lecithin, and like glycerophospholipids; and sphingomyelin, ceramide phosphorylethanolamine, ceramide phosphorylglycerol, and like sphingophospholipids.

Other examples of the materials constituting the outer membrane include nonionic surfactants; and dispersants, such as a mixture of these surfactants and cholesterols or triacylglycerols.

Examples of nonionic surfactants include one or more members selected from polyglycerolether, dialkylglycerol, polyoxyethylene hardened castor oil, polyoxyethylene alkylether, polyoxyethylene sorbitan fatty acid ester, sorbitan fatty acid ester, polyoxyethylene polyoxypropylene copolymers, polybutadiene-polyoxyethylene copolymers, polybutadiene-poly2-vinylpyridine, polystyrene-polyacrylic acid copolymers, polyethylene oxide-polyethyl ethylene copolymers, polyoxyethylene-polycaprolactam copolymers, and the like.

Examples of the cholesterols include one or more members selected from cholesterol, α-cholestanol, β-cholestanol, cholestane, desmosterol (5,24-cholestadiene-3β-ol), sodium cholate, cholecalciferol, and the like.

The outer membrane of the liposome may also be formed from a mixture of a phospholipid and a dispersant. In the antiviral article of the present invention, the outer membrane of the liposome is formed of a phospholipid, whereby excellent compatibility is obtained between the resin composition, which is the main component of each layer, and various additives.

Antiviral Resin Composition

The antiviral resin composition of the present invention comprises a curable resin composition and antiviral particles.

The embodiments of the "curable resin composition" and "antiviral particles" in the antiviral resin composition of the present invention are the same as the embodiments of the "curable resin composition" and "antiviral particles" in the antiviral article of the present invention described above.

The antiviral resin composition of the present invention may optionally comprise a phenyl ether derivative compound, an antioxidant, a light stabilizer, an ultraviolet absorber, an extender pigment (inorganic particles, organic particles), an antibacterial agent, an anti-allergen agent, an anti-mold agent, a flame retardant, a lubricant, a foaming agent, a deodorant, and other additives.

The embodiments of the "phenyl ether derivative compound," "antioxidant," "light stabilizer," "ultraviolet absorber," "extender pigment (inorganic particles, organic particles)," "antibacterial agent," and "anti-allergen agent" in the antiviral resin composition of the present invention are the same as the embodiments of the "antioxidant," "light stabilizer," "ultraviolet absorber," "extender pigment (inorganic particles, organic particles)", "antibacterial agent," and "anti-allergen agent" in the antiviral article of the present invention described above.

Solvent

The antiviral resin composition of the present invention preferably comprises a solvent. If the antiviral resin composition comprises a solvent, the antiviral particles can be more likely to emerge on the surface of the cured product layer when the solvent volatilizes, and the antiviral particles can be easily distributed unevenly around the surface of the

cured product layer.

Examples of solvents include ketones (e.g., acetone, methyl ethyl ketone, methyl isobutyl ketone (MIBK), and cyclohexanone), ethers (e.g., dioxane and tetrahydrofuran), aliphatic hydrocarbons (e.g., hexane), alicyclic hydrocarbons (e.g., cyclohexane), aromatic hydrocarbons (e.g., toluene and xylene), halogenated carbons (e.g., dichloromethane and dichloroethane), esters (e.g., methyl acetate, ethyl acetate, and butyl acetate), alcohols (e.g., isopropanol, butanol, and cyclohexanol), cellosolves (e.g., methyl cellosolve and ethyl cellosolve), glycol ethers (e.g., propylene glycol monomethyl ether acetate), cellosolve acetates, sulfoxides (e.g., dimethylsulfoxide), amides (e.g., dimethylformamide and dimethylacetamide), and mixtures thereof.

Of these, for example, methyl ethyl ketone and ethyl acetate are preferred from the viewpoint of maintaining the shape of the antiviral particles.

The content of the solvent is preferably 10 to 60 mass%, more preferably 30 to 50 mass%, based on the total amount of the antiviral resin composition (ink for cured product layers).

## Examples

The present invention is described in more detail below with reference to Examples. However, the present invention is not limited to the Examples.

### 1. Evaluation of Discoloration Suppression

The inks for cured product layers (the antiviral resin compositions) of the Examples and the Comparative Example, and the antiviral articles of the Examples and the Comparative Example were evaluated as follows. The evaluation was conducted in an atmosphere in which the temperature was 23°C±5°C, and the humidity was 40 to 65% RH.

### 1-1. Discoloration of Ink for Cured Product Layers (Antiviral Resin Composition)

In a room in which external light was blocked, the inks for cured product layers (the antiviral resin compositions) of the Examples and the Comparative Example (30 g each) were placed in glass bottles (produced by AS ONE Corporation, product number: Laboran screw tube bottle 50 ml), and the bottles were closed with a lid, thus producing samples for evaluation. At this stage, the colors of the inks for cured product layers (the antiviral resin compositions) in the samples were all white, without showing a difference from the color of a composition to which an antiviral agent was not added (a composition in which the antiviral agent was removed from the inks for cured product layers (the antiviral resin compositions) of the Examples and the Comparative Example).

The samples were then placed on a desk and left in a room under fluorescent lighting for 24 hours. Thereafter, the colors of the inks for cured product layers (the antiviral resin compositions) in the samples were visually evaluated. The luminance of the fluorescent lighting on the desk was in the range of 500 to 1000 lux. Table 1 shows the results.

### 1-2. Discoloration of Antiviral Article

The L*a*b* values in terms of the antiviral articles of the Examples and the Comparative Example immediately after the production were measured. For the measurement, a spectrometer (Spectrolino (model name), produced by GretagMacbeth) was used.

Next, the antiviral articles of the Examples and the Comparative Example were subjected to an accelerated weathering test with a metal halide lamp (MWOM) (a test in which a cycle comprising the step of 20 hours of ultraviolet irradiation under the following irradiation conditions, followed by 4 hours of condensation under the following condensation conditions, the cycle being defined as one cycle, is repeated) (8 cycles, 192 hours). Then, the L*a*b* values after the accelerated weathering test were measured.

The color difference (ΔE*ab) was calculated from the measured values immediately after the production and the measured values after the accelerated weathering test. Table 1 shows the results.

The color difference (ΔE*ab) can be calculated according to the following formula, wherein the measured values immediately after the production are $L^{*1}$, $a^{*1}$, and $b^{*1}$, and the measured values after the accelerated weathering test are $L^{*2}$, $a^{*2}$, and $b^{*2}$.

$$\Delta E^{*}ab=[(L^{*2}-L^{*1})^{2}+(a^{*2}-a^{*1})^{2}+(b^{*}2-a^{*2})^{2}]^{1/2}$$

Test Device

Trade name: Daipla Metal Weather, produced by Daipla Wintes Co., Ltd.

Irradiation Conditions

Illuminance: 65 mW/cm$^2$, black panel temperature: 63°C, chamber humidity: 50% RH, time: 20 hours

Condensation Conditions

Illuminance: 0 mW/cm$^2$, chamber humidity: 98% RH, time: 4 hours

2. Preparation of Inks for Cured Product Layers (Antiviral Resin Compositions) and Antiviral Articles

Example 1

An ink a for cured product layers (an antiviral resin composition a) of Example 1 was prepared by mixing and stirring the following formulation.
Ink a for Cured Product Layers (Antiviral Resin Composition a)

- Ionizing radiation-curable resin composition: 100 parts by mass (a total of 100 parts by weight of urethane acrylate resin consisting of 70 parts by weight of polyfunctional urethane oligomer and 30 parts by weight of difunctional oligomer)
- Antiviral particles A: 5 parts by mass (containing the following particles A1 and particles A2 at a mass ratio of 1:1)

(Particles A1: particles containing a styrene polymer derivative compound; a polystyrene sulfonic acid derivative, produced by Shima Trading Co., Ltd., trade name: VERSA-TL3)
(Particles A2: particles containing an unsaturated carboxylic acid derivative compound; particles obtained by drying and molding a solvent-based unsaturated polycarboxylic acid polymer, produced by BYK, trade name: BYK-P104)

Next, an ink for ornamental layers containing two-component curable acrylic-urethane resin and a colorant was applied by gravure printing to one surface of a base material (a titanium oxide-containing polypropylene resin sheet with a thickness of 60 μm), both surfaces of which had been subjected to a corona discharge treatment, and dried to form a 3-μm-thick ornamental layer having a wood-grain pattern.
Next, a 3-μm-thick adhesive layer formed of a urethane resin-based adhesive was formed on the ornamental layer. Further, a polypropylene-based resin was thermally melted and extruded on the adhesive layer using a T-die extruder to form a transparent resin layer having a thickness of 80 μm.
Next, after a corona discharge treatment was applied to the surface of the transparent resin layer, an ink for primer layers was applied to the transparent resin layer by gravure printing and dried to form a primer layer having a thickness of 2 μm.
Next, the ink a for cured product layers (the antiviral resin composition a) obtained above was applied to the primer layer by roll coating to form an uncured cured product layer, followed by drying at 60°C for 1 minutes. Thereafter, an electron beam (applied voltage: 125 kV, 5 Mrad (50 kGy)) was irradiated to achieve crosslinking and curing of the curable resin composition (ionizing radiation-curable resin composition) to form a cured product layer having a thickness of 15 μm, thus obtaining an antiviral article of Example 1.

Comparative Example 1

An ink b for cured product layers (an antiviral resin composition b) of Comparative Example 1 was prepared by removing the antiviral particles A from the ink a for cured product layers (the antiviral resin composition a) used in Example 1 and by adding instead 3 parts by mass of antiviral particles B, in which silver ions were supported on zeolite (product number: AJ10N, produced by Sinanen Zeomic Co., Ltd.,; average particle size: 2.5 um) .
Next, an antiviral article of Comparative Example 1 was obtained in the same manner as in Example 1, except that the ink a for cured product layers (the antiviral resin composition a) was changed to the ink b for cured product layers (the antiviral resin composition b).

Table 1

| | Example 1 | Comparative Example 1 |
|---|---|---|
| Discoloration (in the ink state under fluorescent light for 24 hours) | White | Ocher |
| Discoloration (color difference) | 0.7 | 13.1 |

As shown in Table 1, it can be confirmed that the ink for cured product layers (the antiviral resin composition) and the antiviral article of Example 1 were capable of suppressing discoloration.

3. Evaluation of Antiviral Performance and Anti-allergen Performance

Example 2

An antiviral article was obtained in the same manner as in Example 1, except that in the ink a for cured product layers used in Example 1, the antiviral particles A were changed to particles containing a styrene resin (particles A3) (styrene resin particles, produced by Polysciences, Inc., trade name: Microspheres; particle size: 4.5 um).

Example 3

An antiviral article was obtained in the same manner as in Example 1, except that the ink a for cured product layers of Example 1 was mixed with an anti-allergic anionic phenolic material (EXP20530A, produced by DIC Corporation) and an anti-allergic zinc-based material (EXP20530B, produced by DIC Corporation). The anionic phenolic material and zinc-based material were mixed so that the solid content ratio of each material after mixing was 23 mass% in 100 mass% of the ink a for cured product layers.

Example 4

An antiviral article was obtained in the same manner as in Example 1, except that in the ink a for cured product layers of Example 1, the antiviral particles A were changed to a mixture of the particles A1, the particles A2, and the particles A3, and that an antiviral additive (polyoxyethylene alkyl ether, produced by Kao Corporation; trade name: Emulgen 707) was further mixed.

The antiviral particles A contained the particle A1, the particles A2, and the particle A3 at a mass ratio of 3:2:3. Further, the antiviral particles A were mixed in an amount of 4 parts by mass per 100 parts by mass of the ionizing radiation-curable resin composition. Furthermore, the content of the antiviral additive was 4 parts by mass per 100 parts by mass of the ionizing radiation-curable resin composition (the parts by mass per 100 parts by mass of the cured product was also the same).

Example 5

An antiviral article was obtained in the same manner as in Example 1, except that in the ink a for cured product layers of Example 1, the antiviral particles A were changed to the particles A3, and that an antiviral additive (polyoxyethylene alkyl ether, produced by Kao Corporation; trade name: Emulgen 707) was further mixed.

The antiviral particles A were mixed in an amount of 1.5 parts by mass per 100 parts by mass of the ionizing radiation-curable resin composition. Furthermore, the content of the antiviral additive was 3 parts by mass per 100 parts by mass of the ionizing radiation-curable resin composition (the parts by mass per 100 parts by mass of the cured product was also the same).

Example 6

An antiviral article was obtained in the same manner as in Example 1, except that the ink a for cured product layers of Example 1 was further mixed with an antiviral additive (polyoxyethylene alkyl ether, produced by Kao Corporation; trade name: Emulgen 707).

The antiviral particles A contained the particle A1 and the particles A2 at a mass ratio of 2:3. Further, the antiviral particles A were mixed in an amount of 2.5 parts by mass per 100 parts by mass of the ionizing radiation-curable resin composition. Furthermore, the content of the antiviral additive was 3 parts by mass per 100 parts by mass of the ionizing radiation-curable resin composition (the parts by mass per 100 parts by mass of the cured product was also the same).

Antiviral Performance

An antiviral performance test was performed on the antiviral articles produced in Examples 1, 2, and 4 to 6 and Comparative Example 1 by a method according to the antiviral test method (ISO 21702), and the antiviral activity values against the following virus species were evaluated based on the following evaluation criteria. The evaluation criteria are as follows. Virus species: enveloped virus (influenza virus), non-enveloped virus (feline calicivirus)

++: The antiviral activity values against the two virus species were both 2.0 or more.
+: The antiviral activity value against one of the virus species was 2.0 or more.
-: The antiviral activity values against the two virus species were both less than 2.0.

Table 2 shows the results.

Table 2

| | Example 1 | Example 2 | Example 4 | Example 5 | Example 6 | Comparative Example 1 |
|---|---|---|---|---|---|---|
| Antiviral performance | + | + | ++ | + | ++ | - |

Anti-allergenic Performance

The anti-allergenic performance of the antiviral articles produced in Examples 1 and 3 was evaluated. Specifically, the antiviral articles produced in Example 1 and Example 3 were each finely cut and immersed in an aqueous mite allergen solution for 1 day, and the amount of allergen was then visually confirmed by horizontal development chromatography (Mighty Checker) and evaluated according to the following evaluation criteria. The evaluation criteria are as follows.

+: A decrease in the amount of allergen was confirmed. (Mite allergen level determination was equal to or below positive (+) determination (i.e., about 100 mites/$m^2$ or less).)
-: A decrease in the amount of allergen was not confirmed. (Mite allergen level determination exceeded positive (+) determination.)

Table 3 shows the results.

Table 3

| | Example 1 | Example 3 |
|---|---|---|
| Anti-allergenic performance | - | + |

From the difference in the color density of the checker, it was confirmed that the antiviral article of Example 3 had anti-allergenic performance in comparison with the antiviral article of Example 1.

Description of the Reference Numerals

100: Antiviral article
10: Cured product layer
11: Cured product of curable resin composition
12: Antiviral particle
20: Base material

## Claims

**1.** An antiviral article comprising a cured product layer, wherein

the cured product layer comprises a cured product of a curable resin composition, and antiviral particles, and the antiviral particles contain at least one kind of antiviral particles A selected from the group consisting of

1) particles containing a styrene polymer derivative compound and an unsaturated carboxylic acid derivative compound,
2) mixed particles of particles containing a styrene polymer derivative compound and particles containing an unsaturated carboxylic acid derivative compound, and
3) particles containing a styrene resin.

**2.** The antiviral article according to claim 1, wherein the antiviral particles A are present in an amount of 0.5 to 20.0 parts by mass per 100 parts by mass of the cured product.

**3.** The antiviral article according to claim 1 or 2, wherein the cured product layer is present on a base material.

**4.** The antiviral article according to any one of claims 1 to 3, wherein components constituting the antiviral particles A of 1) and/or 2) have at least one structure selected from the group consisting of styrene, sodium sulfonate, acrylic acid, maleic acid, and fumaric acid.

**5.** The antiviral article according to any one of claims 1 to 4, wherein the cured product layer further comprises a phenyl ether derivative compound.

**6.** The antiviral article according to any one of claims 1 to 5, wherein the cured product layer further comprises at least one member selected from the group consisting of antibacterial agents and anti-allergen agents.

**7.** The antiviral article according to any one of claims 1 to 6, wherein the antiviral particles further contain antiviral particles B, which are different from the antiviral particles A.

**8.** The antiviral article according to any one of claims 1 to 7, wherein the antiviral particles have two different particle size peaks.

**9.** An antiviral resin composition comprising
a curable resin composition and antiviral particles, wherein the antiviral particles contain at least one kind of antiviral particles A selected from the group consisting of

1) particles containing a styrene polymer derivative compound and an unsaturated carboxylic acid derivative compound,
2) mixed particles of particles containing a styrene polymer derivative compound and particles containing an unsaturated carboxylic acid derivative compound, and
3) particles containing a styrene resin.

**10.** The antiviral resin composition according to claim 9, further comprising a phenyl ether derivative compound.

**11.** The antiviral resin composition according to claim 9 or 10, further comprising at least one member selected from the group consisting of antibacterial agents and anti-allergen agents.

**12.** The antiviral resin composition according to any one of claims 9 to 11, wherein the antiviral particles further contain antiviral particles B, which are different from the antiviral particles A.

**13.** The antiviral resin composition according to any one of claims 9 to 12, wherein the antiviral particles have two different particle size peaks.

Fig. 1

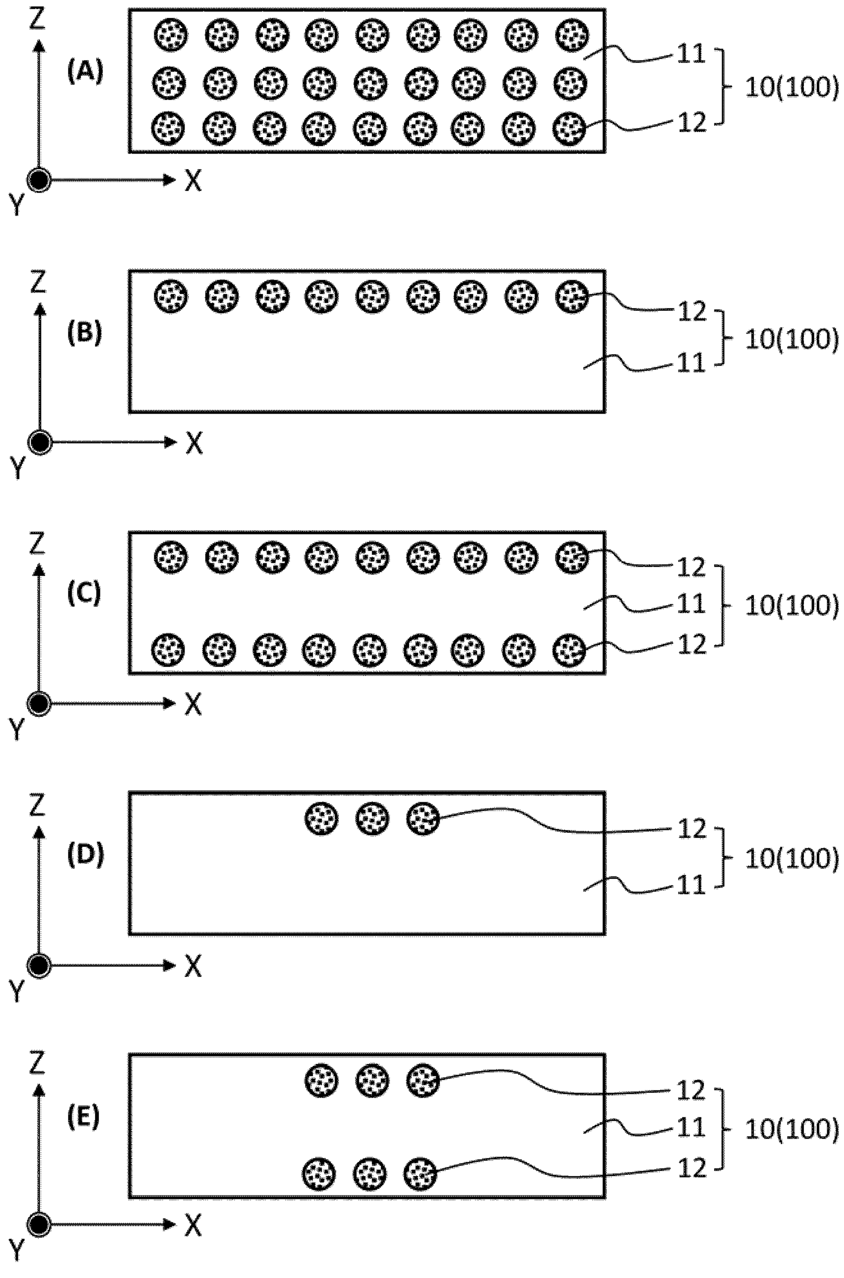
Z
(A)
11
10(100)
12
X
Y
Z
(B)
12
10(100)
11
X
Y
Z
(C)
12
11
10(100)
12
X
Y
Z
(D)
12
10(100)
11
X
Y
Z
(E)
12
11
10(100)
12
X
Y

Fig. 2

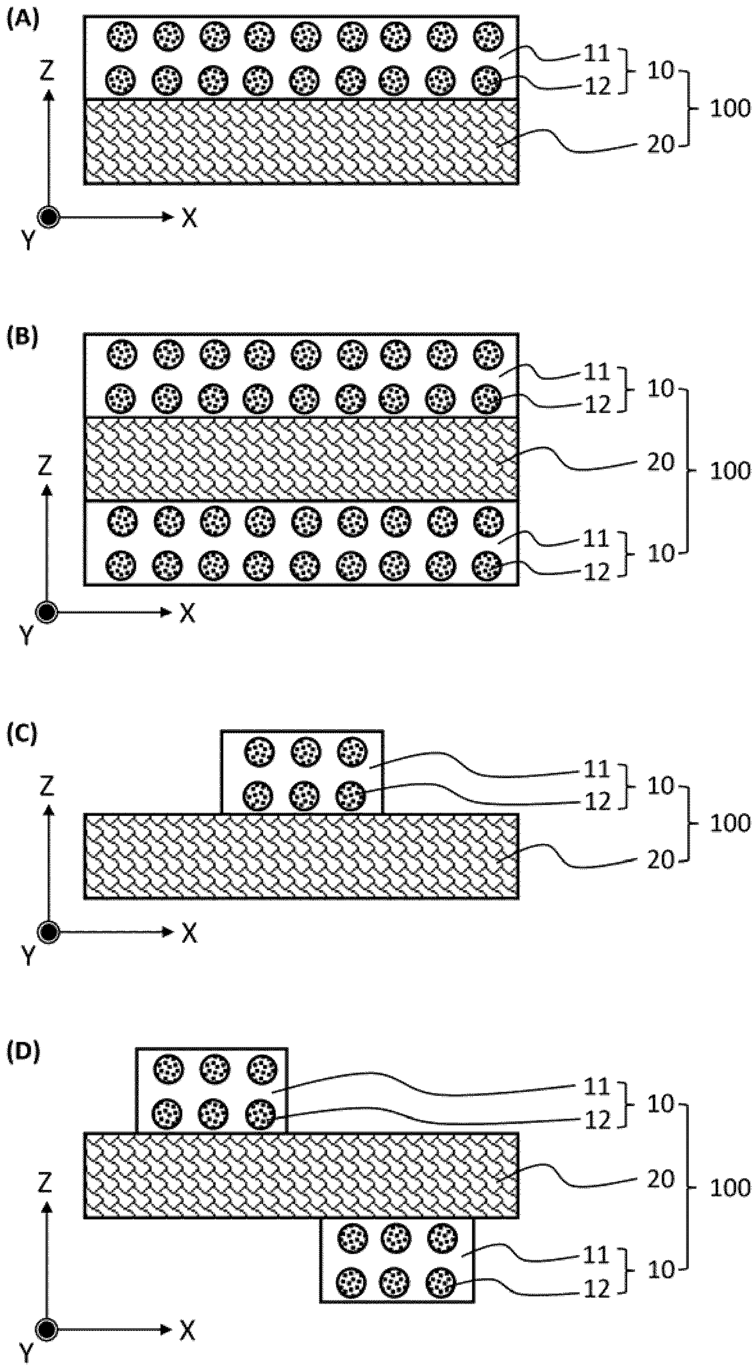
(A)
Z
X
Y
11
12
10
100
20
(B)
11
12
10
20
100
11
12
10
Z
X
Y
(C)
11
12
10
100
20
Z
X
Y
(D)
11
12
10
20
100
11
12
10
Z
X
Y

Fig. 3

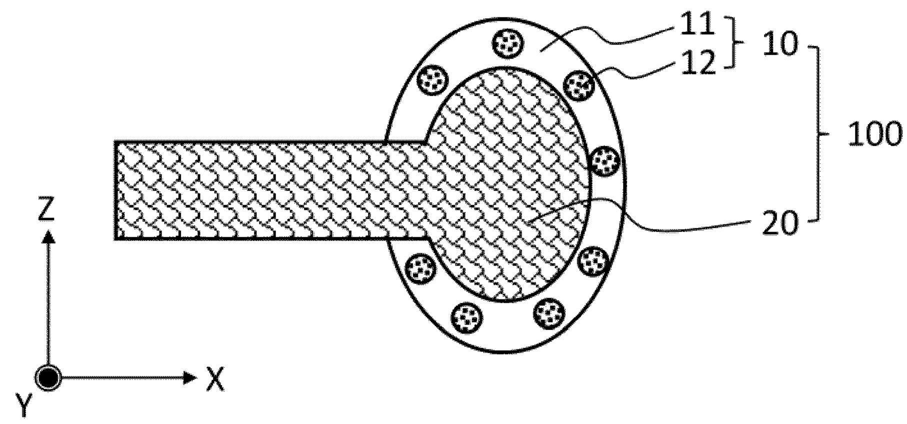

**INTERNATIONAL SEARCH REPORT**

International application No. **PCT/JP2021/033773**

**A. CLASSIFICATION OF SUBJECT MATTER**

***B32B 27/30***(2006.01)i; ***A01N 27/00***(2006.01)i; ***A01N 31/00***(2006.01)i; ***A01N 37/00***(2006.01)i; ***A01P 1/00***(2006.01)i; ***C08L 25/04***(2006.01)i; ***C08L 25/08***(2006.01)i; ***C08L 33/00***(2006.01)i; ***C08L 33/02***(2006.01)i; ***C08L 101/00***(2006.01)i; ***A01N 41/04***(2006.01)i; ***A01N 25/10***(2006.01)i

FI: C08L101/00; C08L25/04; C08L33/00; C08L25/08; C08L33/02; B32B27/30 B; A01N25/10; A01N27/00; A01N41/04 Z; A01N37/00; A01N31/00; A01P1/00

According to International Patent Classification (IPC) or to both national classification and IPC

**B. FIELDS SEARCHED**

Minimum documentation searched (classification system followed by classification symbols)

B32B27/30; A01N27/00; A01N31/00; A01N37/00; A01P1/00; C08L25/04; C08L25/08; C08L33/00; C08L33/02; C08L101/00; A01N41/04; A01N25/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-193966 A (SEKISUI CHEMICAL CO LTD) 30 September 2013 (2013-09-30) claims, paragraphs [0012], [0027], [0045], examples | 1-4, 6-9, 11-13<br>5, 10 |
| Y<br>A | 新型コロナウイルスに有効な界面活性剤を公表します, News Release, 独立行政法人 製品評価技術基盤機構 [online], 22 May 2020, pp. 1-2, Internet:<URL: http://www.nite.go.jp/data/000109233.pdf>, [retrieval date 08 November 2021] in particular, 2., (Surfactants to Help Removal of Coronavirus from Surfaces (Second Announcement). National Institute of Technology and Evaluation [online].) | 5, 10<br>1-4, 6-9, 11-13 |
| A | WO 2016/157942 A1 (HONDA MOTOR CO LTD) 06 October 2016 (2016-10-06) entire text | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/033773**

**C. DOCUMENTS CONSIDERED TO BE RELEVANT**

| Category* | Citation of document, with indication, where appropriate, of the relevant passages | Relevant to claim No. |
|---|---|---|
| A | JP 2011-42615 A (DAIWABO HOLDINGS CO LTD) 03 March 2011 (2011-03-03) entire text | 1-13 |
| A | JP 2010-30984 A (DAIWABO HOLDINGS CO LTD) 12 February 2010 (2010-02-12) entire text | 1-13 |

Form PCT/ISA/210 (second sheet) (January 2015)

**INTERNATIONAL SEARCH REPORT**
**Information on patent family members**

International application No.
**PCT/JP2021/033773**

| Patent document cited in search report | Publication date (day/month/year) | Patent family member(s) | Publication date (day/month/year) |
|---|---|---|---|
| JP 2013-193966 A | 30 September 2013 | (Family: none) | |
| WO 2016/157942 A1 | 06 October 2016 | US 2018/0051411 A1<br>entire text<br>CN 107407041 A | |
| JP 2011-42615 A | 03 March 2011 | (Family: none) | |
| JP 2010-30984 A | 12 February 2010 | US 2010/0272668 A1<br>entire text<br>WO 2009/104760 A1<br>EP 2243360 A1<br>CN 101932237 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3551201 B
- JP 4840048 B
- JP 6145758 B
- JP 6229429 B
- JP 6136433 B